# EUROPÄISCHE PATENTSCHRIFT

(11) **EP 3 912 455 B1**
(45) Veröffentlichungstag und Bekanntmachung des Hinweises auf die Patenterteilung: **18.12.2024**
(21) Anmeldenummer: 21174160.8
(22) Anmeldetag: 17.05.2021
(51) Int. Cl.: A01D 76/00, A01D 78/00

(54) **MERGER-STEUERGERÄT UND MERGER**
MERGER CONTROL DEVICE AND MERGER
APPAREIL DE COMMANDE DE DISPOSITIF DE FUSION ET DISPOSITIF DE FUSION

(30) Priorität: 18.05.2020 DE 102020113429
(43) Veröffentlichungstag der Anmeldung: 24.11.2021
(73) Patentinhaber: CLAAS Saulgau GmbH, 88348 Bad Saulgau (DE)
(72) Erfinder: Schmid, Christian, 88696 Owingen-Billafingen (DE)

(56) Entgegenhaltungen:
- EP-A1- 2 936 969
- EP-A1- 3 520 600
- EP-A2- 2 517 543
- WO-A1-2019/201394

## Beschreibung

Die Erfindung betrifft ein Merger-Steuergerät und einen Merger.

Aus der EP 2 979 529 B1 ist eine als Merger ausgebildete landwirtschaftliche Erntevorrichtung bekannt. Merger werden auch als Pickup-Schwader bezeichnet. Gemäß diesem Stand der Technik verfügt die als Merger ausgebildete Erntevorrichtung über einen Tragrahmen sowie über ein Fahrwerk. Ferner verfügt die als Merger ausgebildete Erntevorrichtung über als Pickup ausgebildete Aufnahmeorgane zum Aufnehmen von Erntegut sowie über als Bandförderer ausgebildete Querfördereinrichtungen zum Querfördern des aufgenommenen Ernteguts. Über eine am Tragrahmen angreifende Deichsel ist die als Merger ausgebildete landwirtschaftliche Erntevorrichtung an ein Zugfahrzeug koppelbar.

Dann, wenn ein Merger in einer Kurvenfahrt betrieben wird, besteht das Problem, dass die Qualität eines vom Merger ausgebildeten Schwads beeinträchtigt wird. Dies ist insbesondere dann der Fall, wenn eine Förderrichtung der Querfördereinrichtungen auf einen Mittelpunkt der Kurvenfahrt hin ausgerichtet ist, wobei dann die Schwadbildung umso problematischer ist, je enger die Kurvenfahrt ist bzw. je kleiner der Kurvenradius ist. In diesem Fall wird nämlich bei der Kurvenfahrt lokal sehr viel gesammeltes Erntegut unter einer Haufenbildung im Schwad abgelegt, wodurch nicht nur die Schwadform leidet, sondern auch die Effizienz einer den Schwad nachfolgend aufnehmenden landwirtschaftlichen Maschine. Es besteht Bedarf daran, diese Probleme zu vermeiden.

Aus EP 2 936 969 A1 ist eine Kombination aus einem Zugfahrzeug und einer davon gezogenen landwirtschaftlichen Erntemaschine, wie eine Ballenpresse oder einen Ladewagen, bekannt, wobei eine Steuerungseinrichtung vorgesehen ist, die bei einer Überschreitung eines gewissen Lenkwinkels über eine gewisse Mindestdauer ableitet, dass sich die Erntemaschine in einer Feldende-Situation befindet.

EP 2 517 543 A2 offenbart eine landwirtschaftliche Maschine mit einer Anbauvorrichtung zum Anbau verschiedener Anbaugeräte zur Erntegut- und/oder Bodenbearbeitung, mit einer Bodenerfassungseinrichtung zum berührungslosen Erfassen einer Boden- und/oder Erntegutkontur, sowie einer Steuervorrichtung zur Steuerung der landwirtschaftlichen Maschine und/oder des Anbaugeräts in Abhängigkeit der erfassten Boden- und/oder Erntegutkontur, wobei die Bodenerfassungseinrichtung zumindest eine Lasermessvorrichtung umfasst, deren Laserstrahl zum Abtasten der Boden- und/oder Erntegutkontur über einen Abtastbereich führbar ist, und wobei eine Erfassungsvorrichtung zur Erfassung des jeweils an die Anbauvorrichtung angebauten Anbaugeräts vorgesehen ist und von einer Einstellvorrichtung der Abtastbereich der Lasermessvorrichtung in Abhängigkeit des jeweils erfassten Anbaugeräts (3) einstellbar ist.

Hiervon ausgehend liegt der vorliegenden Erfindung die Aufgabe zugrunde, ein neuartiges Merger-Steuergerät und einen Merger mit einem solchen Merger-Steuergerät zu schaffen.

Diese Aufgabe wird durch ein Merger-Steuergerät zum Steuern des Betriebs eines Mergers oder eines Pickup-Schwaders nach Anspruch 1 gelöst.

Das erfindungsgemäße Merger-Steuergerät ist eingerichtet, um von einem Lenkwinkelsensor als Eingangsgröße einen Lenkwinkel zu empfangen.

Ferner ist das erfindungsgemäße Merger-Steuergerät eingerichtet, um abhängig vom empfangenen Lenkwinkel einer Kurvenfahrt als Ausgangsgröße mindestens ein Stellsignal für als Bandförderer ausgebildete Querfördereinrichtungen des Mergers und/oder mindestens ein Stellsignal für als Pickup ausgebildete Aufnahmeorgane des Mergers zu erzeugen, an die Querfördereinrichtungen und/oder Aufnahmeorgane auszugeben und den Betrieb derselben abhängig vom Lenkwinkel der Kurvenfahrt automatisch anzupassen.

Mit der hier vorliegenden Erfindung wird erstmals vorgeschlagen, den Betrieb der Querfördereinrichtungen und/oder der Aufnahmeorgane eines Mergers oder Pickup-Schwaders bei einer Kurvenfahrt automatisch anzupassen, und zwar abhängig von dem Lenkwinkel der Kurvenfahrt. Liegt ein Lenkwinkel vor, welcher einer Geradeausfahrt entspricht, so passt das Merger-Steuergerät den Betrieb der Querfördereinrichtungen und/oder Aufnahmeorgane nicht an. Liegt hingegen der Lenkwinkel einer Kurvenfahrt vor, so passt das Merger-Steuergerät den Betrieb der Querförderreinrichtungen und/oder den Betrieb der Aufnahmeorgane automatisch an. Hiermit kann auch bei einer Kurvenfahrt die Bildung des Schwads vergleichmäßigt werden. Auch bei einer Kurvenfahrt kann eine gute Schwadform ausgebildet werden. So können Probleme für eine landwirtschaftliche Maschine, die der Aufnahme des Schwads dient, vermieden werden.

Nach einer vorteilhaften Weiterbildung erzeugt das Merger-Steuergerät das mindestens eine Stellsignal für die als Pickup ausgebildeten Aufnahmeorgane derart, dass bei der Kurvenfahrt innenliegende Aufnahmeorgane langsamer betreibbar sind als bei der Kurvenfahrt außenliegende Aufnahmeorgane, wobei das Merger-Steuergerät vorzugsweise eine Geschwindigkeitsdifferenz zwischen den bei der Kurvenfahrt innenliegenden Aufnahmeorganen und den bei der Kurvenfahrt außenliegenden Aufnahmeorganen umso größer wählt, je größer der Lenkwinkel der Kurvenfahrt ist. Dies ist besonders bevorzugt, um bei einer Kurvenfahrt des Mergers eine gleichmäßige Schwadform auszubilden.

Nach der Erfindung erzeugt das Merger-Steuergerät das mindestens eine Stellsignal für die als Bandförderer ausgebildeten Querfördereinrichtungen derart, dass die Querfördereinrichtungen umso langsamer betreibbar sind, je größer der Lenkwinkel der Kurvenfahrt ist, wenn die Förderrichtung der Querfördereinrichtungen zu einem Kurvenmittelpunkt der Kurvenfahrt hingerichtet ist. Dies dient dazu, bei einer Kurvenfahrt des Mergers eine gleichmäßige Schwadform auszubilden. Dazu kann die Geschwindigkeit der Querfördereinrichtungen bis zum Stillstand verlangsamt werden, wobei die Aufnahmeorgane gleichzeitig weiterhin das am Boden liegende Erntegut aufsammeln und auf die Querfördereinrichtungen fördern.

Der erfindungsgemäße Merger ist in Anspruch 4 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:

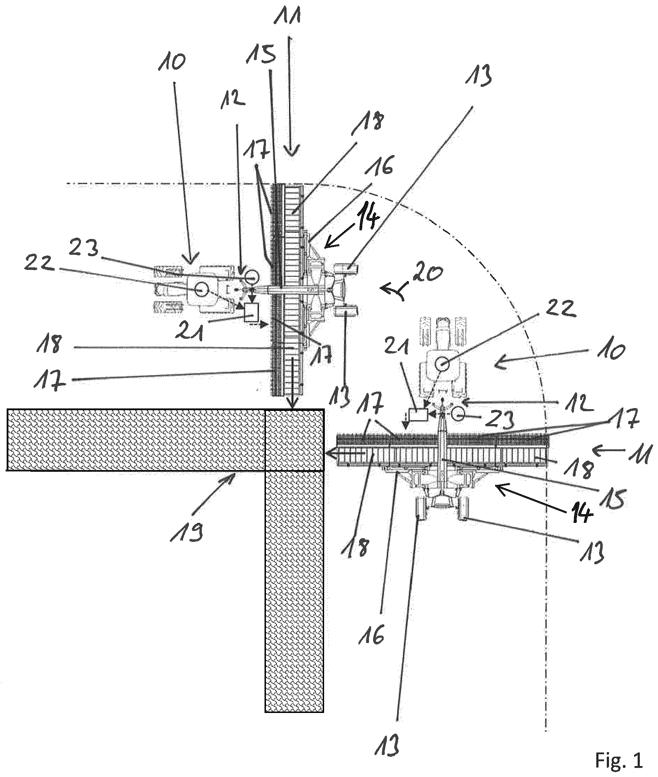

- Fig. 1: eine perspektivische Ansicht von oben auf ein Zuggespann, welches einen Merger und ein Zugfahrzeug umfasst, in einer Kurvenfahrt.

Die Erfindung betrifft ein Merger-Steuergerät sowie einen Merger, welcher ein solches Merger-Steuergerät aufweist. Merger werden auch als Pickup-Schwader bezeichnet.

Fig. 1 zeigt eine Darstellung eines Zuggespanns aus einem Zugfahrzeug 10 und einem Merger 11 bei einer Kurvenfahrt, wobei die Kurvenfahrt durch einen Pfeil 20 visualisiert ist. Fig. 1 zeigt das Zuggespann einerseits in einem Zustand vor der

Einfahrt in die Kurve und andererseits in einem Zustand nach der Ausfahrt aus der Kurve.

Der Merger 11 bildet einen Schwad 19, und zwar in Fig. 1 bezogen auf die Kurvenfahrt innenliegend in Richtung auf einen Mittelpunkt der Kurvenfahrt gerichtet.

Der Merger 11 ist an das Zugfahrzeug 10 über eine Deichsel 12 gekoppelt. Die Deichsel 12 greift an einem Tragrahmen 14 des Mergers 11 an und ist in Verlängerung eines Längsträgers 15 des Tragrahmens 14 angeordnet. Der Längsträger 15 erstreckt sich in Fahrtrichtung des Zuggespanns aus Zugfahrzeug 10 und Merger 11.

Der Tragrahmen 14 des Mergers 11 verfügt weiterhin über Querträger 16. Die Querträger 16 erstrecken sich quer oder senkrecht zur Fahrtrichtung des Mergers 11. An den Querträgern 16 sind einerseits Aufnahmeorgane 17 und andererseits Querfördereinrichtungen 18 montiert.

Die Aufnahmeorgane 17 des Mergers 11 sind als sogenannte Pickup ausgebildet und dienen dem Aufnehmen von Erntegut vom zu bearbeitenden Untergrund. Zu einer ersten Seite des Längsträgers 15 ist mindestens ein Aufnahmeorgan 17 und zu einer gegenüberliegenden zweiten Seite des Längsträgers 15 ebenfalls mindestens ein Aufnahmeorgan 17 angeordnet. Vorzugsweise sind, wie in Fig. 1 gezeigt, zu jeder Seite des Längsträgers 15 jeweils zwei Aufnahmeorgane 17 angeordnet. Die Aufnahmeorgane 17 verfügen über Aufnahmezinken, die dem Aufnehmen des Ernteguts vom zu bearbeitenden Untergrund um eine sich quer zur Fahrtrichtung erstreckende Achse angetrieben werden.

Wie bereits ausgeführt, verfügt der Merger 11 zusätzlich zu den Aufnahmeorganen 17 über Querfördereinrichtungen 18. Die Querfördereinrichtungen 18 des Mergers 11 sind als Bandförderer ausgebildet. Über die Querfördereinrichtungen 18 ist das über die Aufnahmeorgane 17 vom zu bearbeitenden Untergrund aufgenommene Erntegut in einer sich quer zur Fahrtrichtung erstreckenden Richtung transportierbar. Wie bereits ausgeführt, fördert in Fig. 1 der Merger 11, nämlich die Querfördereinrichtungen 18 desselben, das Erntegut in Richtung auf einen Mittelpunkt der Kurvenfahrt nach innen. Zu einer ersten Seite des Längsträgers 15 des

Tragrahmens 14 ist mindestens eine Querfördereinrichtung 18 und zu einer gegenüberliegenden zweiten Seite des Längsträgers 15 mindestens eine weitere Querfördereinrichtung 18 angeordnet. Jede dieser Querfördereinrichtungen 18 ist als Bandförderer ausgeführt. Vorzugsweise ist, wie in Fig. 1 gezeigt, zu jeder Seite des Längsträgers 15 jeweils eine einzige Querfördereinrichtung 18 angeordnet. Es ist aber auch möglich, auf beiden Seiten je zwei Querfördereinrichtungen anzuordnen - z.B. geteilte Bandeinheiten, die das Erntegut einander übergeben. Vorzugsweise werden aber beidseits des Längsträgers 15 jeweils die gleiche Anzahl von Querfördereinrichtungen symmetrisch angeordnet.

Der Merger 11 verfügt weiterhin über ein Fahrwerk, wobei von dem Fahrwerk des Mergers 11 Räder 13 gezeigt sind. Über diese Räder 13 stützt sich der Merger 11 auf dem zu bearbeitenden Untergrund ab. Obwohl in Fig. 1 nicht sichtbar, stützt sich jedes der Aufnahmeorgane 17 über Tasträder auf dem zu bearbeitenden Untergrund ab. Alternativ oder zusätzlich können auch andere Führungselemente, wie beispielsweise Kufen, Gleitteller o.ä. vorgesehen werden.

Ein Merger 11 verfügt über ein Merger-Steuergerät 21, um den Betrieb des Mergers 11 zu steuern und/oder zu regeln. Die Erfindung betrifft die Steuerung des Betriebs des Mergers 11 über das Merger-Steuergerät 21 bei einer Kurvenfahrt, um eine möglichst gleichmäßige Schwadbildung zu gewährleisten.

Das erfindungsgemäße Merger-Steuergerät 21 ist eingerichtet, um von einem Lenkwinkelsensor 22, 23 als Eingangsgröße einen Lenkwinkel zu empfangen.

Fig. 1 zeigt zwei Lenkwinkelsensoren 22, 23. Der eine Lenkwinkelsensor 22 ist dem Zugfahrzeug 10 zugeordnet und schließt abhängig von einer Lenkradbetätigung am Zugfahrzeug 10 auf den Lenkwinkel und bei einer Kurvenfahrt auf einen Kurvenradius der Kurvenfahrt. Das Merger-Steuergerät 21 ist vorzugsweise auch dazu eingerichtet, ein Geschwindigkeitssignal von einem - am Zugfahrzeug 10 oder am Merger 11 angeordneten - Geschwindigkeitssensor zu empfangen. Das Merger-Steuergerät 21 berechnet auf dieser Basis anhand des Lenkwinkels und der Geschwindigkeit den sich tatsächlich jeweils einstellenden Kurvenradius.

Der andere Lenkwinkelsensor 23 ist dem Merger 11 zugeordnet und insbesondere im Bereich der Deichsel 12 verbaut. Auch dieser Lenkwinkelsensor 23 kann einen Lenkwinkel erfassen. Der dem Merger 11 zugeordnete Lenkwinkelsensor 23 ist vorzugsweise als Deichselsensor ausgeführt, der den Winkel erfasst, der sich bei einer Kurvenfahrt zwischen der Längsachse des Zugfahrzeugs 10 und der Längsachse des Mergers 11 einstellt. Aus diesem Winkel kann direkt auf den aktuell gefahrenen Kurvenradius geschlossen werden. Dann, wenn der Lenkwinkelsensor 23 im Bereich des Mergers 11 verbaut ist, ist eine Datenübertragung ausgehend vom Zugfahrzeug 10 in Richtung auf das Merger-Steuergerät 21 nicht erforderlich.

Der vom Lenkwinkelsensor 22, 23 bereitgestellte Lenkwinkel gibt Aufschluss darüber, ob der Merger 11 in einer Geradeausfahrt oder in einer Kurvenfahrt betrieben wird.

Bei einer Kurvenfahrt gibt der Lenkwinkel, der vom jeweiligen Lenkwinkelsensor 22, 23 bereitgestellt wird, Auskunft über den Radius der Kurvenfahrt, ob also eine enge Kurvenfahrt oder eine weite Kurvenfahrt des Mergers 11 bzw. des Zuggespanns aus Merger 11 oder Zugfahrzeug 10 vorliegt.

Das erfindungsgemäße Merger-Steuergerät 21 ist weiterhin eingerichtet, um abhängig vom empfangenen Lenkwinkel einer Kurvenfahrt als Ausgangsgröße mindestens ein Stellsignal für die als Bandförderer ausgebildeten Querfördereinrichtungen 18 des Mergers 11 und/oder mindestens ein Stellsignal für die als Pick-up ausgebildeten Aufnahmeorgane 17 des Mergers 11 zu erzeugen, das mindestens eine Stellsignal an die Querfördereinrichtungen 18 und/der die Aufnahmeorgane 17 auszugeben und über das mindestens eine Stellsignal den Betrieb der Querfördereinrichtungen 18 und/oder der Aufnahmeorgane 17 abhängig vom Lenkwinkel der Kurvenfahrt automatisch anzupassen.

Vorzugsweise ist vorgesehen, dass das Merger-Steuergerät 21 das mindestens eine Stellsignal für die als Pickup ausgebildeten Aufnahmeorgane 17 derart erzeugt, dass bei der Kurvenfahrt innenliegende Aufnahmeorgane 17 langsamer betreibbar sind als bei der Kurvenfahrt außenliegende Aufnahmeorgane 17. So müssen die bei der Kurvenfahrt außenliegenden Aufnahmeorgane 17 eine größere Fläche des zu bearbeitenden Untergrunds überfahren und demnach mehr Erntegut aufnehmen als die bei der Kurvenfahrt innenliegenden Aufnahmeorgane 17. Um also die Gutaufnahme vom zu bearbeitenden Untergrund bei einer Kurvenfahrt zu verbessern, schlägt die Erfindung vor, dass das Merger-Steuergerät 21 das mindestens eine Stellsignal für die Aufnahmeorgane 17 so erzeugt, dass die bei der Kurvenfahrt innenliegenden Aufnahmeorgane langsamer betreibbar sind als die bei der Kurvenfahrt außenliegenden Aufnahmeorgane bzw. die bei der Kurvenfahrt außenliegenden Aufnahmeorgane schneller betreibbar sind als die bei der Kurvenfahrt innenliegenden Aufnahmeorgane. Hierzu wird die Drehzahl der als Pickup ausgebildeten Aufnahmeorgane 17 über das jeweilige Stellsignal automatisch angepasst. Eine Geschwindigkeitsdifferenz bzw. Drehzahldifferenz für den Betrieb der bei der Kurvenfahrt innenliegenden Aufnahmeorgane 17 und den bei der Kurvenfahrt außenliegenden Aufnahmeorgane 17 wird dabei vom Merger-Steuergerät 21 umso größer gewählt, je größer der Lenkwinkel ist.

Zusätzlich oder alternativ zu dem mindestens einen Stellsignal für die als Pickup ausgebildeten Aufnahmeorgane 17 erzeugt das Merger-Steuergerät 21 mindestens ein Stellsignal für die als Bandförderer ausgebildeten Querfördereinrichtungen 18. In dem in Fig. 1 gezeigten Ausführungsbeispiel, in welchem die Förderrichtung der Querfördereinrichtungen 18 zu einem Kurvenmittelpunkt der Kurvenfahrt hin ausgerichtet ist, und demnach bei der Kurvenfahrt innen der Schwad 19 ausgebildet wird, erzeugt das Merger-Steuergerät 21 das mindestens eine Stellsignal für die Querfördereinrichtungen 18 derart, dass die Querfördereinrichtungen 18 umso langsamer betreibbar sind, je größer der Lenkwinkel ist. Die bei der Kurvenfahrt innenliegenden Querfördereinrichtungen 18 und die bei der Kurvenfahrt außenliegenden Querfördereinrichtungen 18 werden dabei mit der gleichen Geschwindigkeit angetrieben. Die Geschwindigkeit der Querfördereinrichtungen 18 kann zur Vermeidung einer Haufenbildung bis zum Stillstand verlangsamt werden, wobei die Aufnahmeorgane 17 gleichzeitig weiterhin das am Boden liegende Erntegut aufsammeln und auf die Querfördereinrichtungen 18 fördern.

Dann, wenn eine Förderrichtung der Querfördereinrichtungen 18 nach außen, also vom Kurvenmittelpunkt der Kurvenfahrt weg gerichtet ist, um außenliegend einen Schwad auszubilden, und zwar angrenzend zu der in Fig. 1 gezeigten strichpunktierten Linie, so erzeugt das Merger-Steuergerät 21 das mindestens eine Stellsignal für die als Bandförderer ausgebildeten Querfördereinrichtungen 18 derart, dass die Geschwindigkeit der Querfördereinrichtungen 18 entweder unverändert bleibt oder umso schneller ist, je größer der Lenkwinkel ist.

Wird der Merger 11 in einer Geradeausfahrt betrieben, so werden die als Pickup ausgebildeten Aufnahmeorgane 17 und die als Bandförderer ausgebildeten Querfördereinrichtungen 18 über das Merger-Steuergerät 21 jeweils mit einer Soll-Geschwindigkeit betrieben. Bei Einfahrt in eine Kurve werden diese Soll-Geschwindigkeiten automatisch angepasst. Während der Kurvenfahrt mit konstantem Lenkwinkel bleiben dann die angepassten Soll-Geschwindigkeiten unverändert. Bei der Ausfahrt aus der Kurvenfahrt werden die entsprechenden Soll-Geschwindigkeiten wieder so geändert, dass dieselben den Soll-Geschwindigkeiten der Geradeausfahrt entsprechen.

Eine Anpassung der Geschwindigkeit für den Betrieb der Aufnahmeorgane 17 und eine Anpassung der Geschwindigkeit für den Betrieb der Querfördereinrichtungen 18 kann unabhängig voneinander erfolgen. So müssen dann, wenn Geschwindigkeiten sowohl der Aufnahmeorgane 17 als auch der Querfördereinrichtungen 18 angepasst werden, die entsprechenden Anpassungen nicht gleichzeitig durchgeführt werden. So ist es möglich, zunächst lediglich die Geschwindigkeit der Aufnahmeorgane 17 und anschließend die Geschwindigkeit für die Querfördereinrichtungen 18 an die Kurvenfahrt anzupassen. Auch kann zunächst die Geschwindigkeit der Querfördereinrichtungen 18 an die Kurvenfahrt angepasst werden und erst im Anschluss hieran die Geschwindigkeit der Aufnahmeorgane 17. Auch kann dies abhängig vom Lenkwinkel erfolgen. So ist es möglich, bei relativ kleinen Lenkwinkeln entweder nur die Querfördereinrichtungen 18 oder die Aufnahmeorgane 17 hinsichtlich ihres Betriebs abhängig von Lenkwinkel automatisch anzupassen. Bei relativ großen Lenkwinkeln ist es möglich, sowohl die Querfördereinrichtungen 18 als auch die Aufnahmeorgane 17 automatisch abhängig vom Lenkwinkel hinsichtlich ihres Betriebs automatisch anzupassen.

Die Erfindung betrifft nicht nur das Merger-Steuergerät 21, sondern vielmehr auch den Merger 11, der neben den als Pickup ausgebildeten Aufnahmeorganen 17 und den als Bandförderer ausgebildeten Querfördereinrichtungen 18 das oben beschriebene Merger-Steuergerät 21 aufweist. Der Betrieb der Aufnahmeorgane 17 und/oder Querfördereinrichtungen 18 kann vom Merger-Steuergerät 21 abhängig vom Lenkwinkel automatisch angepasst werden.

Die Aufnahmeorgane 17 können dabei individuell angesteuert werden, um an den unterschiedlichen Aufnahmeorganen 17 abhängig vom Lenkwinkel unterschiedliche Geschwindigkeiten einzustellen.

Vorzugsweise verfügt der Merger 11 über den Lenkwinkelsensor 23 der im Bereich der Deichsel 12 verbaut ist, um den Lenkwinkel unmittelbar am Merger 11 zu erfassen und die Kommunikation mit dem Merger-Steuergerät 21 zu vereinfachen.

Sofern der dem Merger 11 zugeordnete Lenkwinkelsensor 23 als Deichselsensor ausgeführt ist, der den Winkel erfasst, der sich bei einer Kurvenfahrt zwischen der Längsachse des Zugfahrzeugs 10 und der Längsachse des Mergers 11 einstellt, kann aus dem Wert des Lenkwinkelsensors 23 direkt auf den aktuell gefahrenen Kurvenradius geschlossen werden. Bei dieser Ausführung können die Stellsignale für die Querfördereinrichtungen 18 und/oder Aufnahmeorgane 17 ohne Verzögerung ausgegeben werden. Wenn das Merger-Steuergerät 21 von dem Lenkwinkelsensor 22 ausgeht, der dem Zugfahrzeug 10 zugeordnet ist, stellt sich der entsprechende Kurvenradius erst ein, wenn das Zuggespann eine bestimmte Strecke zurückgelegt hat. In diesem Fall kann vorgesehen werden, die Stellsignale für die Querfördereinrichtungen 18 und/oder Aufnahmeorgane 17 verzögert auszugeben.

Das erfindungsgemäße Merger-Steuergerät 21 ist nicht auf den beschriebenen gezogenen Merger 11 beschränkt, sondern kann auch an einem selbstfahrenden Merger vorgesehen werden.

### Bezugszeichenliste

- 10: Zugfahrzeug
- 11: Merger
- 12: Deichsel
- 13: Räder
- 14: Tragrahmen
- 15: Längsträger
- 16: Querträger
- 17: Aufnahmeorgan
- 18: Querfördereinrichtung
- 19: Schwad
- 20: Kurvenfahrt
- 21: Merger-Steuergerät
- 22: Lenkwinkelsensor
- 23: Lenkwinkelsensor

## Patentansprüche

1. Merger-Steuergerät (21) zum Steuern des Betriebs eines Mergers oder eines P ickup-Schwaders,
wobei das Merger-Steuergerät (21) eingerichtet ist, um von einem Lenkwinkelsensor (22, 23) als Eingangsgröße einen Lenkwinkel zu empfangen,
wobei das Merger-Steuergerät (21) eingerichtet ist, um abhängig vom empfangenen Lenkwinkel einer Kurvenfahrt als Ausgangsgröße mindestens ein Stellsignal für als Bandförderer ausgebildete Querfördereinrichtungen (18) des Mergers und/oder mindestens ein Stellsignal für als Pickup ausgebildete Aufnahmeorgane (17) des Mergers zu erzeugen, an die Querfördereinrichtungen (18) und/oder Aufnahmeorgane (17) auszugeben und den Betrieb derselben abhängig vom Lenkwinkel der Kurvenfahrt steuerungsseitig automatisch anzupassen, **dadurch gekennzeichnet, dass** das Merger-Steuergerät (21) das mindestens eine Stellsignal für die als Bandförderer ausgebildeten Querfördereinrichtungen (18) derart erzeugt, dass die Querfördereinrichtungen (18) umso langsamer betreibbar sind, je größer der Lenkwinkel der Kurvenfahrt ist, wenn die Förderrichtung der Querfördereinrichtungen (18) zu einem Kurvenmittelpunkt der Kurvenfahrt hingerichtet ist und / oder das Merger-Steuergerät (21) das mindestens eine Stellsignal für die als Bandförderer ausgebildeten Querfördereinrichtungen (18) derart erzeugt, dass die Geschwindigkeit der Querfördereinrichtungen (18) unverändert bleibt oder die Querfördereinrichtungen (18) umso schneller betreibbar sind, je größer der Lenkwinkel der Kurvenfahrt ist, wenn die Förderrichtung der Querfördereinrichtungen (18) von einem Kurvenmittelpunkt der Kurvenfahrt weggerichtet ist.

2. Merger-Steuergerät nach Anspruch 1, **dadurch gekennzeichnet, dass** dasselbe das mindestens eine Stellsignal für die als Pickup ausgebildeten Aufnahmeorgane (17) derart erzeugt, dass bei der Kurvenfahrt innenliegende Aufnahmeorgane (17) langsamer betreibbar sind als bei der Kurvenfahrt außenliegende Aufnahmeorgane (17).

3. Merger-Steuergerät nach Anspruch 2, **dadurch gekennzeichnet, dass** dasselbe eine Geschwindigkeitsdifferenz zwischen den bei der Kurvenfahrt innenliegenden Aufnahmeorganen (17) und den bei der Kurvenfahrt außenliegenden Aufnahmeorganen (17) umso größer wählt, je größer der Lenkwinkel der Kurvenfahrt ist.

4. Merger (11) oder Pickup-Schwader,
mit als Pickup ausgebildeten Aufnahmeorganen (17) zum Aufnehmen von Erntegut,
mit mindestens einer als Bandförderer ausgebildeten Querfördereinrichtung (18) zum Fördern des aufgenommenen Ernteguts in einer quer zu einer Enterrichtung oder Fahrtrichtung verlaufenden Querförderrichtung,
**gekennzeichnet durch**
ein Merger-Steuergerät (21) nach einem der Ansprüche 1 bis 3.

5. Merger nach Anspruch 4, **gekennzeichnet durch** einen Lenkwinkelsensor (23) zur Erfassung eines Lenkwinkels einer Kurvenfahrt, der insbesondere als Deichselsensor ausgeführt ist, der einen Winkel erfasst, der sich bei einer Kurvenfahrt zwischen der Längsachse eines - den Merger (11) ziehenden - Zugfahrzeugs (10) und der Längsachse des Mergers (11) einstellt.

## Claims

1. Merger control device (21) for controlling the operation of a merger or a pick-up header,
wherein the merger control device (21) is designed to receive a steering angle from a steering angle sensor (22, 23) as an input variable,
wherein the merger control device (21) is designed, as a function of the received cornering steering angle, to generate as an output variable at least one adjusting signal for transverse conveying devices (18) of the merger configured as belt conveyors and/or at least one adjusting signal for receiving members (17) of the merger configured as pick-ups, to output the said adjusting signal to the transverse conveying devices (18) and/or receiving members (17) and to adapt the operation thereof automatically as a function of the cornering steering angle on the control side, **characterized in that** the merger control device (21) generates the at least one adjusting signal for the transverse conveying devices (18) configured as belt conveyors in such a way that the transverse conveying devices (18) can be operated all the more slowly the larger the cornering steering angle when the conveying direction of the transverse conveying devices (18) is oriented toward a curve centre point of the cornering and/or the merger control device (21) generates the at least one adjusting signal for the transverse conveying devices (18) configured as belt conveyors in such a way that the speed of the transverse conveying devices (18) remains unchanged or the transverse conveying devices (18) can be operated all the more quickly the greater the steering angle of the cornering when the conveying direction of the transverse conveying devices (18) is oriented away from a curve centre point of the cornering.

2. Merger control device according to Claim 1, **characterized in that** the said merger control device generates the at least one adjusting signal for the receiving members (17) configured as pick-ups in such a way that receiving members (17) situated on the inside during cornering can be operated more slowly than receiving members (17) situated on the outside during cornering.

3. Merger control device according to Claim 2, **characterized in that** the said merger control device selects a speed difference between the receiving members (17) situated on the inside during cornering and the receiving members (17) situated on the outside during cornering to be all the greater the greater the cornering steering angle.

4. Merger (11) or pick-up header,
having receiving members (17) configured as pick-ups for receiving harvested crops,
having at least one transverse conveying device (18) configured as a belt conveyor for conveying the received harvested crops in a transverse conveying direction running transversely to a harvesting direction or direction of travel,
**characterized by**
a merger control device (21) according to any of Claims 1 to 3.

5. Merger according to Claim 4, **characterized by** a steering angle sensor (23) for detecting a cornering steering angle which is designed, in particular, as a drawbar sensor which detects an angle which is established between the longitudinal axis of a towing vehicle (10) - towing the merger (11) - and the longitudinal axis of the merger (11) during cornering.

## Revendications

1. Appareil de commande de groupeur (21) permettant de commander le fonctionnement d'un groupeur ou d'un andaineur ramasseur,
dans lequel l'appareil de commande de groupeur (21) est aménagé pour recevoir d'un capteur d'angle de braquage (22, 23) un angle de braquage comme grandeur d'entrée,
dans lequel l'appareil de commande de groupeur (21) est aménagé pour générer, en fonction de l'angle de braquage reçu d'un déplacement en virage comme grandeur de sortie, au moins un signal de réglage pour des équipements de convoyage transversal (18) du groupeur, réalisés sous forme de convoyeurs à bande, et/ou au moins un signal de réglage pour des éléments de ramassage (17) du groupeur, réalisés sous forme de ramasseurs, pour le sortir aux équipements de convoyage transversal (18) et/ou aux éléments de ramassage (17), et pour adapter automatiquement côté commande leur fonctionnement en fonction de l'angle de braquage du déplacement en virage,
**caractérisé en ce que** l'appareil de commande de groupeur (21) génère ledit au moins un signal de réglage pour les équipements de convoyage transversal (18), réalisés sous forme de convoyeurs à bande, de telle sorte que les équipements de convoyage transversal (18) peuvent fonctionner autant plus lentement que l'angle de braquage du déplacement en virage est grand si le sens de convoyage des équipements de convoyage transversal (18) est orienté vers un centre de virage du déplacement en virage et/ou que l'appareil de commande de groupeur (21) génère ledit au moins un signal de réglage pour les équipements de convoyage transversal (18), réalisés sous forme de convoyeurs à bande, de telle sorte que la vitesse des équipements de convoyage transversal (18) reste inchangée ou les équipements de convoyage transversal (18) peuvent fonctionner d'autant plus vite que l'angle de braquage du déplacement en virage est grand si le sens de convoyage des équipements de convoyage transversal (18) est détourné d'un centre de virage du déplacement en virage.

2. Appareil de commande de groupeur selon la revendication 1, **caractérisé en ce qu'**il génère ledit au moins un signal de réglage pour les éléments de ramassage (17), réalisés sous forme de ramasseurs, de telle sorte que des éléments de ramassage (17) intérieurs lors du déplacement en virage peuvent fonctionner plus lentement que des éléments de ramassage (17) extérieurs lors du déplacement en virage.

3. Appareil de commande de groupeur selon la revendication 2, **caractérisé en ce qu'**il sélectionne une différence de vitesse entre les éléments de ramassage (17) intérieurs lors du déplacement en virage et les éléments de ramassage (17) extérieurs lors du déplacement en virage d'autant plus grande que l'angle de braquage du déplacement en virage est grand.

4. Groupeur (11) ou andaineur ramasseur,
comprenant des éléments de ramassage (17) réalisés sous forme de ramasseurs pour ramasser la récolte,
comprenant au moins un équipement de convoyage transversal (18) réalisé sous forme de convoyeur à bande pour transporter la récolte ramassée dans un sens de convoyage transversal s'étendant transversalement à un sens de la récolte ou à un sens de la marche,
**caractérisé par** un appareil de commande de groupeur (21) selon l'une quelconque des revendications 1 à 3.

5. Groupeur selon la revendication 4, **caractérisé par** un capteur d'angle de braquage (23) pour détecter un angle de braquage d'un déplacement en virage qui est réalisé en particulier sous forme de capteur de barre d'attelage qui détecte un angle qui se forme lors d'un déplacement en virage entre l'axe longitudinal d'un véhicule tracteur (10) - tractant le groupeur (11) - et l'axe longitudinal du groupeur (11).
